# EUROPEAN PATENT APPLICATION

(11) **EP 1 195 769 A2**
(43) Date of publication of application: **10.04.2002**
(21) Application number: 01308194.8
(22) Date of filing: 26.09.2001
(51) Int. Cl.: G11B 33/12, G11B 25/04

(54) **Modular card-type disk drive**

(30) Priority: 04.10.2000 KR 2000058322
(71) Applicant: SAMSUNG ELECTRONICS CO., LTD., Suwon-City, Kyungki-do (KR)
(72) Inventor: Hong, Soon-kyo, Seocho-gu, Seoul (KR); Koh, Hyeong-cheon, Bundang-gu, Sungnam-city, Kyungki-do (KR); Lee, Chul-woo, Bundang-gu, Sungnam-city, Kyungki-do (KR); Bae, Byoung-young, Songtanjiyuk, Pyungtaek-city, Kyungki-do (KR)
(74) Representative: Chugg, David John

(57) **Abstract**

A disk drive includes a first case (110) including a disk, a disk driving unit, a recording/reproducing device, and a recording/reproducing device driving unit, and a second case (120) including a driving circuit to drive and control the recording/reproducing device and the recording/reproducing device driving unit, where the second case (120) is pivotally connected with the first case (110), and a flexible cable (130) electrically connects the disk driving unit and the recording/reproducing device driving unit with the driving circuit. Accordingly, the thickness of the first case (110) can be increased since only the second case (120) needs to be inserted into a PCMCIA slot, and a PCMCIA card type disk drive with a large storage capacity can be manufactured.

## Description

This application claims the benefit of Korean Application No. 2000-58322, filed October 4, 2001, in the Korean Industrial Property Office, the disclosure of which is incorporated herein by reference.

The present invention relates to a PCMCIA card type disk drive, and more particularly to a PCMCIA card type disk drive having a large storage capacity created by an improved disk drive structure and being capable of having an expanded storage capacity created by changing storage devices.

Peripheral devices used with game machines, camcorders, digital cameras, and laptop computers have to be small. For example, the peripheral devices for laptop computers have been manufactured to be the size of a credit card. However, there is a compatibility problem caused by different standards of each manufacturer. The PCMCIA (Personal Computer Card International Association) is an international standard regulating association that regulates standard for various cards used in personal computers, and especially those used with laptop computers. Examples of these cards include PCMCIA type I, PCMCIA type II, and PCMCIA type III cards, all of which are made according to the standard promulgated by the PCMCIA. The allowable peripheral devices using the PCMCIA standard are memory cards, card type hard disk drives, fax modem cards, and LAN cards.

To connect the peripheral devices to a laptop computer so as to expand its capabilities, the laptop computer needs to have a PCMCIA slot. The PCMCIA slot is shaped to receive a credit card sized PCMCIA card. Within the PCMCIA slot and the PCMCIA card are respective connectors allowing the slot and card to be connected with each other.

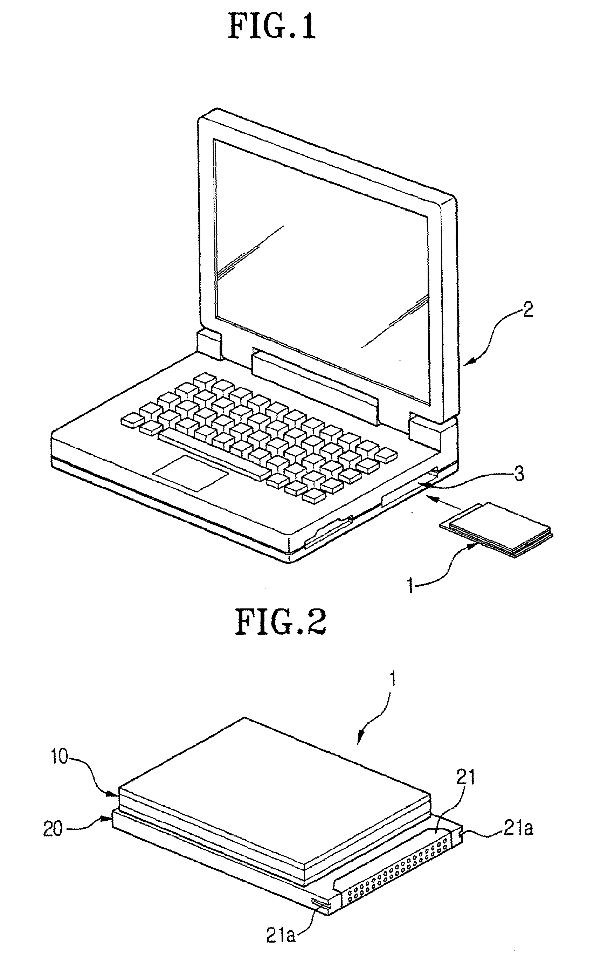

As shown in Figure 1, a conventional PCMCIA card type hard disk drive 1 is shaped to be inserted entirely into a PCMCIA slot 3 in a laptop computer 2. As shown in Figure 2, the hard disk drive 1 basically includes a frame 10 and a cover 20. At one end of the cover 20 is a connector 21 that is inserted into the PCMCIA slot 3 to be electrically connected with the laptop computer 2. At both ends of the connector 21 there are grooves 21a in a predetermined pattern to connect with protrusions (not shown) formed in the PCMCIA slot 3.

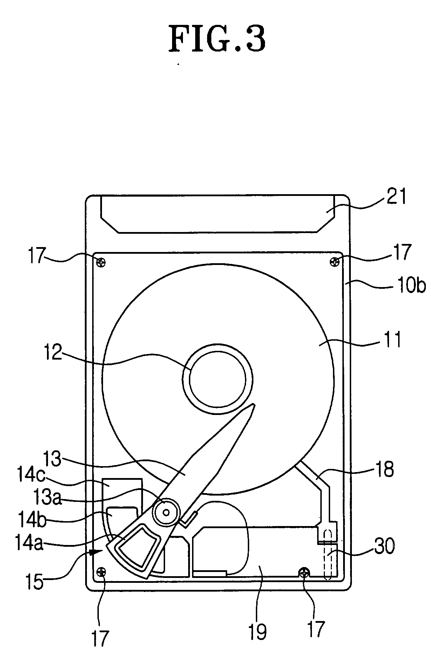

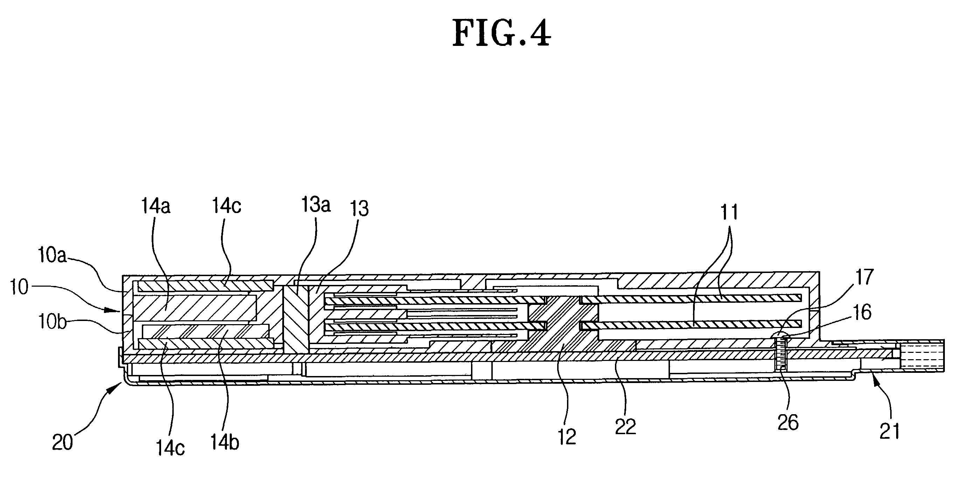

As shown in Figures 3 and 4, a circuit board 22 is attached to the bottom of the frame 10. The frame 10 includes a cover frame 10a and a base frame 10b. Two vertically-stacked hard disks 11, a hard disk driving part 12 that drives the hard disks 11, a recording/reproducing device 13 that records and reproduces information to/from the hard disks 11, and a recording/reproducing device driving unit 14 that drives the recording/reproducing device 13 are in a space between the cover and base frames 10a and 10b. The recording/reproducing device driving unit 14 includes a coil 14a, a yoke 14b, and magnets 14c. The hard disk driving unit 12 and a pivot 13a of the record and reproducing device 13 are in the base frame 10b. The recording/reproducing device 13 records and reproduces information to/from the hard disk 11 by radially turning about the pivot 13a of the hard disk 11 in accordance with the driving of the recording/reproducing device driving unit 14.

The square type base frame 10b is connected to the cover 20 using screws 17 which pass through screw holes 16 and 26 formed at four corners of the base frame 10b and the cover 20. The hard disk driving unit 12, the recording/reproducing device driving unit 14, and the circuit board 22 reciprocally transmit a signal via a connector 30, and the connector 30 is connected with a hard disk driving circuit 18 and a recording/reproducing device driving circuit 19.

In the hard disk drive 1, since the hard disk 11, the hard disk driving unit 12, the recording/reproducing device 13, the recording/reproducing device driving unit 14, and the circuit board 22, which are stacked vertically, have to be inserted into the PCMCIA slot 3, the thickness of the hard drive 1 cannot be increased when the hard drive 1 is manufactured. In other words, the conventional hard disk drive 1 cannot increase the number of the hard disks 11 due to the international standard regulation of the PCMCIA card, which causes a problem in creating a disk drive having a large storage capacity.

It is an aim of embodiments of the present invention to provide a PCMCIA card type disk drive having an improved structure to create a large storage capacity.

Additional aims and advantages of embodiments of the invention will be set forth in part in the description which follows and, in part, will be obvious from the description, or may be learned by practice of the invention.

According to a first aspect of the present invention, there is provided a disk drive comprising: a first case including a disk, a disk driving unit to drive the disk, a recording and reproducing deviceto record and reproduce data to and from the disk, and a recording/reproducing device driving unit to drive the recording and reproducing device; a second case including a driving circuit to drive and control the recording/reproducing device driving unit and the disk driving unit, where said second case is pivotally connected with said first case; and a connection member to electrically connect the recording/reproducing device and the recording/ reproducing device driving unit with the driving circuit.

Said first case and said second case are suitably hinged each other.

In another aspect of the invention, there is provided a disk drive comprising: a first case including a disk, a disk driving unit to drive the disk, a recording/reproducing device, and a recording/reproducing device driving unit to drive the recording/reproducing device; a second case including a connector formed at one end and a driving circuit to drive and control the disk driving unit and the recording/reproducing device driving unit; and a connection member to electrically connect the recording/reproducing device and the recording/reproducing device driving unit with the driving circuit of said second case, and to removably connect said first case and said second case.

Said connection member suitably includes a first connector formed at one end of said first case, and a second connector formed at the other end of said second case and being removably connected with the first connector.

Said second case may further comprise additional second connectors formed at the other end to receive additional devices.

The disk drive may further comprise a connection cable having connectors at both ends to connect the first connector and the second connector

In a third aspect, there is provided a device for use with an external device, comprising: a first case including a peripheral device; a second case that is connected with said first case; and a controller disposed within one of said first case and said second case to drive the peripheral device, wherein one of said first and second cases is a PCMCIA compliant card, and said first and second cases provide a communication pathway to transmit data between the external device and the peripheral device.

Said first case may be attached to and able to move relative to said second case.

Said first case is preferably pivotally attached to said second case.

One of said first case and said second case may comprise hinge holes, and the other of said first case and said second case comprises hinge pins corresponding to the hinge holes so as to pivotally attach said first and second cases

The device may include a connector cable to connect said first case to said second case.

Said controller is preferably disposed in said second case, and said second case is the PCMCIA compliant card.

Said first case is preferably not PCMCIA compliant and cannot be inserted into a PCMCIA compliant slot of the external device.

The device may further comprise a connector to removably connect said first case and said second case and to provide the communication pathway.

The controller is suitably disposed in said second case, and said second case is the PCMCIA compliant card.

Said first case is preferably not PCMCIA compliant and cannot be inserted into a PCMCIA compliant slot of the external device.

Said connector may comprise a flexible connector having end, wherein one of the ends is connected to said first case and another one of the ends is connected to said second case.

Said connector may comprise ends, wherein one of the ends is connected to said first case and another one of the ends is connected to said second case.

Said connector may comprise additional ends to be connected to additional peripheral devices and to form additional communication pathways between the external device and the additional peripheral devices.

One of the additional peripheral devices may include a modem card.

The peripheral device may comprise a disk, a disk driving unit to drive the disk, a recording and/or reproducing device to record and/or reproduce data to and/or from the disk, and a recording and/or reproducing device driving unit to drive the recording and reproducing device, and said controller drives the recording/reproducing device driving unit and the disk driving unit.

Said first case may comprise additional disks driven by the disk driving unit and having data recorded and/or reproduced using the recording and/or reproducing device.

Said first case may comprise a first connector and said second case may further comprise a second connector that removably receives the first connector to form the communication pathway.

Said second case is preferably received by a slot of the external device in an insertion direction, and the second connector is disposed on said second case such that said first case is at an angle to the insertion direction.

Said first case may be roughly perpendicular to the insertion direction.

Said second case may further comprise additional connectors that are stacked with the second connector.

Said second case may be received by a slot of the external device in an insertion direction, and the second connector disposed on said second case such that said first case is parallel to the insertion direction.

Said second case may be received by a slot of the external device in an insertion direction, and the second connector disposed on said second case such that said first case is parallel to the insertion direction.

In yet another aspect, there is provided a disk drive for use with an external device, comprising: a case; a disk disposed in said case; a disk driving unit disposed in said case to drive said disk; a recording and/or reproducing device disposed in said case to record and/or reproduce data to and/or from said disk; a recording and/or reproducing device driving unit disposed in said case to drive said recording and reproducing device; and a connector to form a communication pathway with a controller disposed within an external case that drives a recording/reproducing device driving unit and the disk driving unit and to transmit the data read from or recorded to said disk between the external device and said recording and reproducing device.

The disk drive is preferably not a PCMCIA compliant card.

The external case is preferably a PCMCIA compliant card.

The external case is preferably the PCMCIA compliant card.

Said connector may be removably attached to the external case while the external case is attached to the external device so as to be removed while the external device remains attached to the external device.

Said connector may be removably attached to the external case while the external case is attached to the external device so as to be removed while the external device remains attached to the external device.

In a still further aspect, there is provided a device to connect a peripheral device and an external device, comprising: a case; a controller within said case; a first connector to form a communication pathway with the peripheral device disposed in an external case to drive and control the peripheral device; and a second connector to form a communication pathway to allow the data to be transmitted between the peripheral device and the external device.

The external case is preferably not a PCMCIA compliant card.

Said case is preferably a PCMCIA compliant card.

Said first connector is preferably removably attached to the external case so that the external case is able to be disconnected from said first connector while the external device remains attached to said second connector.

Suitably, said first connector is removably attached to the external case so that the external case is able to be disconnected from said first connector while the external device remains attached to said second connector.

Suitably, the peripheral device comprises a disk driving unit to drive a disk, and a recording and/or reproducing device driving unit disposed in the external case to drive a recording and reproducing device to record and/or reproduce data to and/or from the disk, and said controller to control the disk driving unit and the recording and/or reproducing device driving unit.

For a better understanding of the invention, and to show how embodiments of the same may be carried into effect, reference will now be made, by way of example, to the accompanying diagrammatic drawings in which:
Figure 1 is a schematic perspective view showing a conventional PCMCIA card type hard disk drive being inserted into a PCMCIA slot of a laptop computer;
Figure 2 is a perspective view showing a conventional PCMCIA card type hard disk drive;
Figure 3 is a plan view showing the hard disk drive of Figure 2 without a cover frame and an upper yoke;
Figure 4 is a sectional view of the hard disk drive of Figure 2;
Figure 5 is a perspective view showing a PCMCIA card type disk drive according to an embodiment of the present invention;
Figure 6 is an exploded perspective view of the disk drive of Figure 5;
Figure 7 is a schematic perspective view showing the disk drive of Figure 5 being inserted into a PCMCIA slot of a laptop computer;
Figure 8 is a perspective view showing the disk drive of Figure 5 being completely folded;
Figure 9 is an exploded perspective view of a PCMCIA card type disk drive according to another embodiment of the present invention;
Figure 10 is a perspective view showing a circuit board of the disk drive of Figure 9 having multiple connectors; and
Figure 11 is a perspective view showing the first case being connected with the second case in the disk drive of Figure 9 by a separate connection cable according to a further embodiment of the present invention.

A detailed description according to the preferred embodiments of the present invention will now be made referring to the attached drawings. Throughout the description, the same reference numeral will be used for the same parts with the conventional hard disk drive shown in Figures 3 and 4, and the description of the same parts will therefore be omitted.

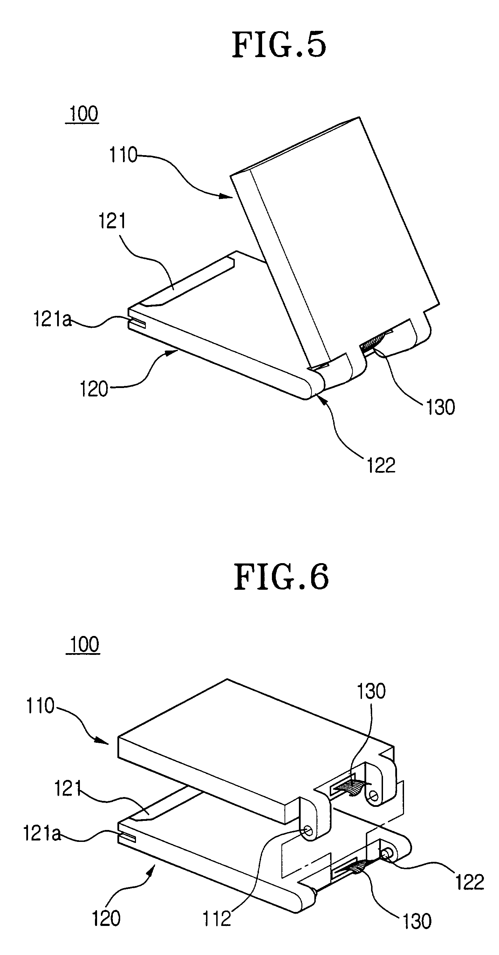

As shown in Figures 5 and 6, a disk drive 100 according to an embodiment of the present invention includes a first case 110 and a second case 120, which are pivotally connected to each other. The first case 110 includes similar elements to those shown in Figures 3 and 4 including one or more disks 11, a disk driving unit 12, a recording/reproducing device 13, and a recording/reproducing device driving unit 14 formed therein. The second case 120 also includes similar elements to those shown in Figures 3 and 4 including a circuit board 22 having a driving circuit 18 to drive and control the disk driving unit 12 and the recording/reproducing device driving unit 14 of the first case 110. The detailed description about the construction of the first case 110 and the second case 120 will be omitted since the construction is the same with the hard disk drive described in the part of the related art shown in Figures 3 and 4.

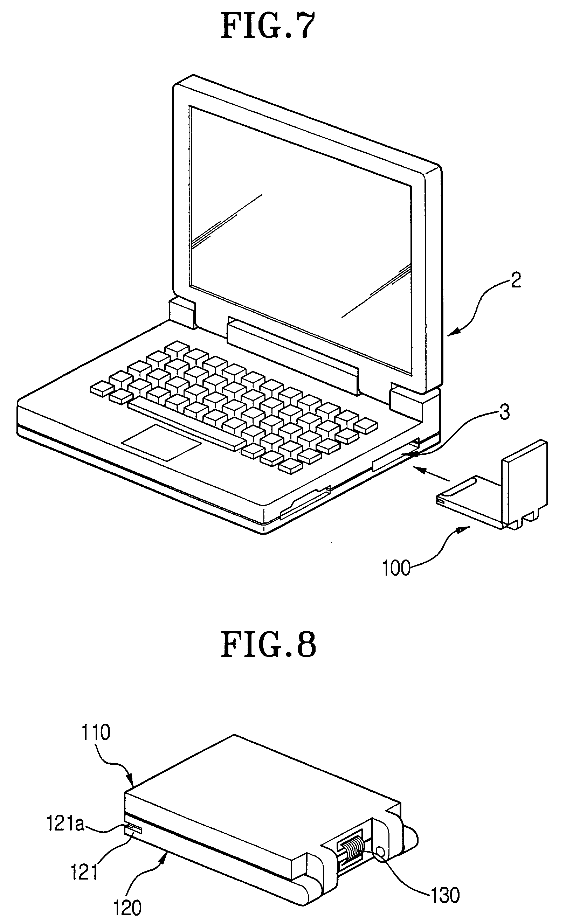

At one end of the second case 120, a connector 121 is formed to be electrically connected with a PCMCIA slot 3 of a laptop computer 2 shown in Figure 7. Grooves 121a of a predetermined pattern are formed in one end and opposite sides of the second case 120 across the connector 121 in order to connect with protrusions (not shown) formed in the PCMCIA slot 3. The disk driving unit 12 and the recording/reproducing device driving unit 14 of the first case 110 and the driving circuit 18 of the second case 120 are electrically connected by a connection member 130. In addition, it is understood that the driving circuit 18 could be disposed in the first case 110 such that the second case 120 is used to form a communication pathway, electrical or otherwise, to allow the data to be transmitted between the laptop computer 2 and the recording and reproducing device 13.

A pair of hinge holes 112 are formed in the first case 110, and a pair of hinge pins 122 are formed in the second case 120. The hinge pins 122 are inserted into the hinge holes 112 to pivotally connect the first case 110 and the second case 120. A connector 130 is installed between the hinge holes 112 and the hinge pins 122. The connector 130 is a flexible cable that electrically connects the driving unit 12 of the first case 110 and the driving circuit 18 of the second case 120. The flexible cable 130 is thin film wherein a minute circuit is formed inside. The flexible cable 130 is flexible such that it can be bent and unbent without any limitation in accordance with the turning of the first case 110 relative to the second case 120.

While not shown, it is understood that the hinge pins 122 can be formed on the first case 110 and the hinge holes 112 can be formed in the second case 120. Further, while the connection member 130 is shown pivotally connecting the first case 110 and the second case 120, other types of connectors, such as flexible plastic connectors, could be used so long as the first case 110 and the second case 120 can be pivotally connected.

Since the first case 110 can turn relative to the second case 120, the disk drive 100 can be installed in the laptop computer 2 by inserting the second case 120 into the PCMCIA slot 3 as shown in Figure 7. Therefore, the thickness of the first case 110, which is not inserted into the PCMCIA slot 3, can be made as thick as it needs to be. In other words, the number of the disks 11 that are installed in the first case 110 can be increased. After inserting the second case 120 into the PCMCIA slot 3 of the laptop computer 2, the disk drive 100 can be used when the first case 110 is at a right or any other angle relative to the second case 120. Further, as shown in Figure 8, when storing or carrying the disk drive 100, a user can fold the first case 110 and the second case 120 to reduce the volume of the disk drive 100.

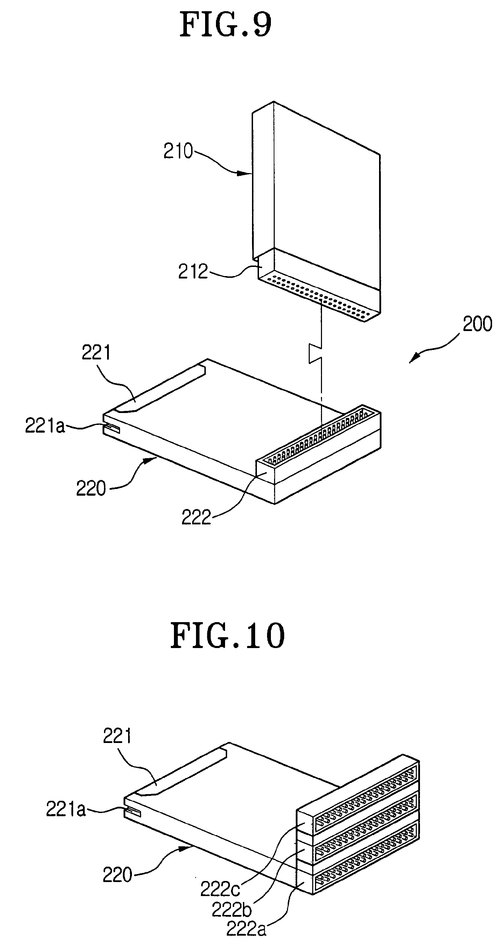

As shown in another embodiment of the present invention in Figures 7 and 9, a disk drive 200 includes a first case 210 and a second case 220 being connected with each other. At one end of the second case 220, a connector 221 is electrically connected with the PCMCIA slot 3 of the laptop computer 2, and includes certain patterned grooves (221a) of a predetermined pattern formed in one end and the opposite sides of the second case 210 across the connector 221 to connect with protrusions (not shown) formed in the PCMCIA slot 3.

A first connector 212 is used to connect the first case 210 with the second case 220 and is formed at on end of the first case 210. A second connector 222 which connects with the first connector 212, is formed at the second case 220. Since the first connector 212 and the second connector 222 are removably engaged with each other, the first case 210 and the second case 220 can be easily connected and separated. The first connector 212 and the second connector 222 also electrically connect the disk driving unit 12 of Figure 3 and the recording/reproducing device driving unit 14 of Figure 3 installed in the first case 210 with the driving circuit 18 in the second case 220. For the disk drive 200, since the first case 210 can be separated from the second case 220, a user can change the first case 210 when the first case 210 is broken or there is a need to expand the storage capacity.

On the other hand, as shown in FIG 10, a plurality of second connectors 222a, 222b, 222c are vertically stacked and attached to the second case 220. Therefore, the first case 210 is inserted into the second connector 222a and, simultaneously, other peripheral devices needed for expansion, such as a modem card, can be inserted into the remaining second connectors 222b, 222c. By doing so, the problem caused by the narrow space needed to form a slot 3 in a laptop computer 2 can be solved.

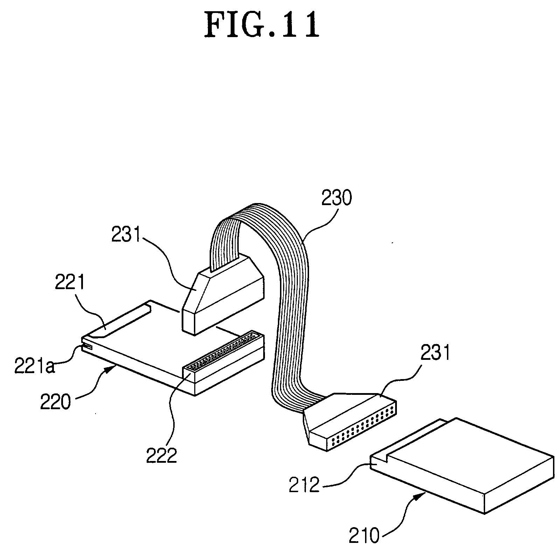

In addition, as shown in the embodiment of the present invention shown in Figure 11, the first connector 212 and the second connector 222 can be connected by a connection cable 230 having connectors 231 formed at both ends.

As described above, according to the disk drive of the present invention, since the first case and the second case are pivotally and/or removably connected with each other, only the second case 120 needs to be inserted into the PCMCIA slot when the disk drive is installed in the laptop computer. Thus, the thickness of the first case can be increased to obtain a disk drive with a large storage capacity.

Furthermore, according to the present invention, the cost can be reduced by allowing a user to change only the first case 210 when there is a need for expanding the storage capacity of the drive by removably connecting the first drive with the second drive.

In addition, according to the present invention, a plurality of second connectors are formed in the second case embedded with a circuit board to receive a plurality of PCMCIA cards including other expandable peripheral devices like modem cards without having to form a plurality of PCMCIA slots in the laptop computer.

Although the preferred embodiments of the present invention have been described, it will be understood by those skilled in the art that the present invention should not be limited to the described preferred embodiments, but various changes and modifications can be made within the scope of the present invention. Accordingly, the scope of the present invention is not limited within the described range but the following claims and their equivalents.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A disk drive (100) comprising:
a first case (110) including a disk (11), a disk driving unit (12) to drive the disk (11), a recording and reproducing device (13) to record and reproduce data to and from the disk, and a recording/reproducing device driving unit (14) to drive the recording and reproducing device;
a second case (120) including a driving circuit (18) to drive and control the recording/reproducing device driving unit (14) and the disk driving unit (12), where said second case (120) is pivotally connected with said first case (110); and
a connection member (130) to electrically connect the recording/reproducing device (13) and the recording/ reproducing device driving unit (14) with the driving circuit (18).

2. The disk drive of claim 1, wherein said first case (110) and said second case (120) are hinged each other.

3. A disk drive comprising:
a first case (210) including a disk, a disk driving unit to drive the disk, a recording/reproducing device, and a recording/reproducing device driving unit to drive the recording/reproducing device;
a second case (220) including a connector (221) formed at one end and a driving circuit to drive and control the disk driving unit and the recording/reproducing device driving unit; and
a connection member to electrically connect the recording/reproducing device and the recording/reproducing device driving unit with the driving circuit of said second case, and to removably connect said first case and said second case.

4. The disk drive of claim 3, wherein said connection member includes a first connector (212) formed at one end of said first case (210), and a second connector (222) formed at the other end of said second case (220) and being removably connected with the first connector (212).

5. The disk drive of claim 4, wherein said second case (220) further comprises additional second connectors (222a-c) formed at the other end to receive additional devices.

6. The disk drive of claim 4, further comprising a connection cable (230) having connectors (231) at both ends to connect the first connector (212) and the second connector (222).

7. A device for use with an external device, comprising:
a first case (110; 210) including a peripheral device;
a second case that is connected with said first case (110; 210); and
a controller disposed within one of said first case (120; 220) and said second case to drive the peripheral device,wherein
one of said first and second cases (110; 210) is a PCMCIA compliant card, and
said first and second cases provide a communication pathway to transmit data between the external device and the peripheral device.

8. The device according to claim 7, wherein said first case (110; 210) is attached to and able to move relative to said second case (120; 220).

9. The device according to claim 8, wherein said first case (110) is pivotally attached to said second case (120).

10. The device according to claim 9, wherein one of said first case (110) and said second case (120) comprises hinge holes, and the other of said first case (110) and said second case (120) comprises hinge pins corresponding to the hinge holes so as to pivotally attach said first and second cases

11. The device according to claim 8, further comprises a connector cable (230) to connect said first case (210) to said second case (220).

12. The device according to claim 7 or 11, wherein said controller is disposed in said second case (220), and said second case (220) is the PCMCIA compliant card.

13. The device according to claim 12, wherein said first case (210) is not PCMCIA compliant and cannot be inserted into a PCMCIA compliant slot of the external device.

14. The device according to claim 7, further comprising a connector (222; 230) to removably connect said first case (210) and said second case (220) and to provide the communication pathway.

15. The device according to claim 14, wherein said controller is disposed in said second case (220), and said second case (220) is the PCMCIA compliant card.

16. The device according to claim 15, wherein said first case (210) is not PCMCIA compliant and cannot be inserted into a PCMCIA compliant slot of the external device.

17. The device according to claim 14, wherein said connector (230) comprises a flexible connector having ends (231), wherein one of the ends is connected to said first case (210) and another one of the ends is connected to said second case (220).

18. The device according to claim 14, wherein said connector comprises ends (222), wherein one of the ends is connected to said first case (210) and another one of the ends is connected to said second case (220).

19. The device according to claim 18, wherein said connector comprises additional ends (222a-c) to be connected to additional peripheral devices and to form additional communication pathways between the external device and the additional peripheral devices.

20. The device according to claim 19, wherein one of the additional peripheral devices includes a modem card.

21. The device according to claim 7 or 13 or 16, wherein
the peripheral device comprises a disk (11), a disk driving unit (12) to drive the disk (11), a recording and/or reproducing device (13) to record and/or reproduce data to and/or from the disk, and a recording and/or reproducing device driving unit (14) to drive the recording and reproducing device (13), and
said controller drives the recording/reproducing device driving unit (14) and the disk driving unit (12).

22. The device according to claim 21, wherein said first case (210) comprises additional disks driven by the disk driving unit and having data recorded and/or reproduced using the recording and/or reproducing device.

23. The device according to claim 12, wherein said first case (210) comprises a first connector (212) and said second case (220) further comprises a second connector (222) that removably receives the first connector (212) to form the communication pathway.

24. The device according to claim 23, wherein said second case (220) is received by a slot of the external device in an insertion direction, and
the second connector (222) is disposed on said second case (220) such that said first case (210) is at an angle to the insertion direction.

25. The device according to claim 24, wherein said first case (210) is roughly perpendicular to the insertion direction.

26. The device according to claim 23, wherein said second case (220) further comprises additional connectors (222a-c) that are stacked with the second connector (222).

27. The device according to claim 23, wherein said second case (220) is received by a slot of the external device in an insertion direction, and
the second connector (222) is disposed on said second case (220) such that said first case (210) is parallel to the insertion direction.

28. The device according to claim 26, wherein said second case (220) is received by a slot of the external device in an insertion direction, and
the second connector (222) is disposed on said second case (220) such that said first case (210) is parallel to the insertion direction.

29. A disk drive for use with an external device, comprising:
a case (110);
a disk (11) disposed in said case (110);
a disk driving unit (12) disposed in said case (110) to drive said disk (11);
a recording and/or reproducing device (13) disposed in said case (110) to record and/or reproduce data to and/or from said disk (11);
a recording and/or reproducing device driving unit (14) disposed in said case (110) to drive said recording and reproducing device (13); and
a connector (130) to form a communication pathway with a controller disposed within an external case (120) that drives a recording/reproducing device driving unit (14) and the disk driving unit (12) and to transmit the data read from or recorded to said disk (11) between the external device and said recording and reproducing device.

30. The disk drive of claim 31, wherein the disk drive is not a PCMCIA compliant card.

31. The disk drive of claim 29, wherein the external case is a PCMCIA compliant card.

32. The disk drive of claim 30, wherein the external case is the PCMCIA compliant card.

33. The disk drive of claim 29, wherein said connector is removably attached to the external case while the external case is attached to the external device so as to be removed while the external device remains attached to the external device.

34. The disk drive of claim 32, wherein said connector is removably attached to the external case while the external case is attached to the external device so as to be removed while the external device remains attached to the external device.

35. A device to connect a peripheral device and an external device, comprising:
a case (210) ;
a controller within said case (210);
a first connector (212) to form a communication pathway with the peripheral device disposed in an external case to drive and control the peripheral device; and
a second connector (222) to form a communication pathway to allow the data to be transmitted between the peripheral device and the external device.

36. The device of claim 35, wherein the external case (220) is not a PCMCIA compliant card.

37. The device of claim 35 or 36, wherein said case (210) is a PCMCIA compliant card.

38. The device of claim 35, wherein said first connector (210) is removably attached to the external case (220) so that the external case is able to be disconnected from said first connector while the external device remains attached to said second connector (222).

39. The device of claim 37, wherein said first connector is removably attached to the external case so that the external case is able to be disconnected from said first connector while the external device remains attached to said second connector.

40. The device of claim 35, 37 or 38, wherein:
the peripheral device comprises a disk driving unit (12) to drive a disk, and a recording and/or reproducing device driving unit (14) disposed in the external case to drive a recording and reproducing device to record and/or reproduce data to and/or from the disk, and
said controller to control the disk driving unit and the recording and/or reproducing device driving unit.
